# EUROPEAN PATENT SPECIFICATION

(11) **EP 1 424 006 B1**
(45) Date of publication and mention of the grant of the patent: **22.03.2006**
(21) Application number: 03078776.6
(22) Date of filing: 26.11.2003
(51) Int. Cl.: A01M 23/02, A01M 23/08, A01M 1/10, E01C 11/22

(54) **Take-off and/or landing strip**
Start- und/oder Landebahn
Piste de décollage et/ou d'atterrissage

(30) Priority: 26.11.2002 NL 1021993
(43) Date of publication of application: 02.06.2004
(73) Proprietor: Intercodam Milieutechniek B.V., 1001 MH Amsterdam (NL)
(72) Inventor: Kellerman, Martin, 2461 CN Ter Aar (NL)
(74) Representative: van Westenbrugge, Andries

(56) References cited:
- DE-A- 4 134 028
- US-A- 3 898 778
- US-A- 4 241 532

## Description

The present invention relates to a drainage channel, and to a take-off and/or landing strip for aircraft, comprising a paving provided with said drainage channel on at least part of the paving edges, which drainage channel will be used in the main for keeping the strip free from worms. Paving in this context is meant to convey surfaces paved with concrete and/or concrete slabs and/or asphalt, and/or surfaces paved in another way, as is customary in the case of take-off and/or landing strips.

It is generally known that the most risky time during a flight is the take-off and landing, and that birds present in the vicinity of the take-off and landing strip contribute considerably to that risk. At these critical times birds can cause considerable damage to the aircraft if they are sucked into the inlet of the jet engine.

Airports seem to be an attractive spot for birds, probably because of the large open space and the absence of other animals. The large areas with mown grass and the presence of water that is drained off the runways provide an excellent breeding ground for worms. The abundance of worms attracts birds because of the abundant supply of food. It is known that worms move at set times from the grassy area to the take-off and landing strip, and birds are therefore often present in the direct flight path of the aircraft during landing or take-off. Dead worms on the runway attract beetles and other insects, which likewise serve as food for birds.

The present invention provides a paving, which has a drainage channel with a cover grille at the paving edges, which cover grille substantially prevents worms from moving from the grass alongside the take-off and landing strip to the paving of a take-off and landing strip.

Drainage channels having cover grilles and provided with paving edges are known in the literature. US Patent 4,241,532 describes a worm trap in the form of a drainage channel consisting of an elongated profiled element of such a shape that worms crossing the drainage channel find themselves in the profiled element and are unable to leave it again. Means are provided in the profile to electrocute the worms. A major disadvantage of the invention according to this patent is that a complex profiled shape is used, which in combination with the electrocution means leads to a laborious and expensive solution. Furthermore, the drainage channel of this patent appears to be unsuitable for having heavy vehicles, such as lorries, travelling over it. Moreover, the complex shape makes cleaning of the channel more difficult.

Patent DE 4134028 discloses a drainage channel with a cover grille, in the case of which the channel and cover grille are provided with locking means that interact with each other and make it possible to change in a simple manner from a locked to an unlocked position of the cover grille. However, in this patent there is no provision of any kind for preventing worms from being able to move across the cover grille. When this cover grille is used there is a risk that worms will cross over the drainage channel by way of the connecting parts and in this way, for example, reach a take-off or landing strip. Worms which none the less fall into the channel while crossing over can easily crawl out of it again, in view of the shape of the channel and the grille.

The present invention overcomes the abovementioned disadvantages by providing a drainage channel according to claim 6, and a take-off and/or landing strip for aircraft according to claim 1 comprising a paving provided with said drainage channel on at least part of the paving edges, which drainage channel comprises a channel part with a substantially U-shaped cross section and a cover grille, which cover grille comprises
- at least two elongated parts provided in a direction parallel to the longitudinal direction of the channel part and
- connecting parts provided transversely relative to the elongated parts, which cover grille, spanning the free space between the legs of the U-shaped channel part, rests upon shoulders provided on the legs, characterized in that
- the connecting parts are placed at a distance from each other, and in that
- the bottom surface of the at least two elongated parts is closed and extends partially into the spanned space between the legs of the U-shaped channel part.

In view of the fact that the bottom surface of the elongated parts is closed, it will be difficult or impossible here for any worms which have fallen into the channel to crawl out of it again because the fact is that in that case they would have to complete part of the journey "hanging upside down", which a worm is not capable of doing. Furthermore, the connecting parts placed at a distance from each other provide few possibilities for crossing the drainage channel, certainly in connection with the embodiment described in the paragraph below.

Advantageous embodiments according to the invention provide the following:
- the top surface of the connecting parts is recessed relative to the top surface of the cover grille, and/or
- the width of the top surface of the connecting parts of the cover grille is at most 20 mm, and/or
- the width of the gap between the two elongated parts of the cover grille is at least 20 mm and at most 80 mm. These embodiments of the cover grille according to the invention each individually, but also in combination, make it very difficult for the worms to cross the cover grille. On the one hand, the connecting parts are too narrow and/or they are recessed relative to the elongated parts, which makes the crossing difficult, if not impossible and, on the other hand, the width of the gap between the elongated parts is sufficient to prevent worms from being able to cross directly, i.e. without having to cross the connecting parts first.

The drainage channel with cover grille according to the invention therefore substantially ensures not only that worms are prevented from going across, but also that worms present in the channel are prevented from crawling out of it again. With the present invention a simple, economic and effective solution has therefore been found for keeping a paved area free from worms.

It is advantageous according to the invention when the drainage channel is being used according to claim 7 for keeping a paved area free from worms if the drainage channel is provided along at least part of the edge of the paved area. More particularly, it is advantageous if the drainage channel is used according to claim 8 in a corresponding manner for keeping a take-off and landing strip for aircraft free from worms. Such a paved area will be bounded largely by the drainage channel according to the invention, but keeping it free from worms can also partly be achieved by bounding the paved area directly by other objects such as buildings or another larger paved area.

The drainage channel and the cover grille according to the invention will be explained on the basis of the description of two figures, in which:
Figure 1 is a cross section of the drainage channel and the cover grille; and
Figure 2 is a bottom view of the cover grille.

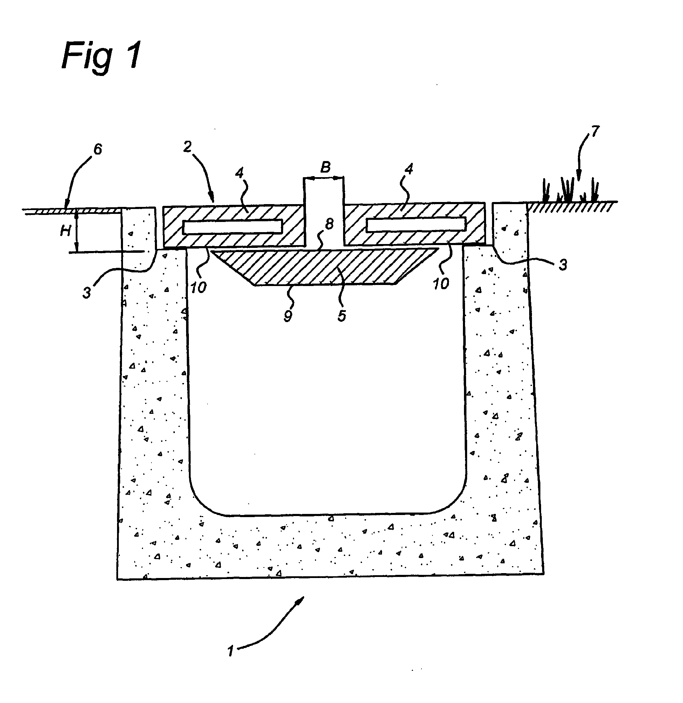

Corresponding numbers here refer to corresponding parts in the two figures. A drainage channel or a channel part 1 (identical here) with a substantially U-shaped cross section and a grille 2 comprising two elongated parts 4 and a connecting part 5 are shown in the cross section of Figure 1. The cover grille 2 rests upon shoulders 3 provided on the legs of the U-shaped drainage channel 1. The elongated parts 4 are tubular here, with the advantage that metal extruded sections can be used for them. Other embodiments, such as sheet material of a certain minimum thickness are, however, also conceivable. Through the use of suitable material, generally structural steel, and use of the correct dimensions, the cover grille of the invention can be made sufficiently sturdy to allow heavy vehicles, such as lorries, to travel over it.

The drainage channel 1 bounds a paved area 6 on the left-hand side and an area with grass 7 on the right-hand side. The connecting part 5 has a top surface 8 and a bottom surface 9, and the elongated parts 4 have a bottom surface 10. In Figure 1 two dimensions are of particular importance for the explanation, namely the width B of the gap between the two elongated parts 4 and the height H of the elongated parts 4.

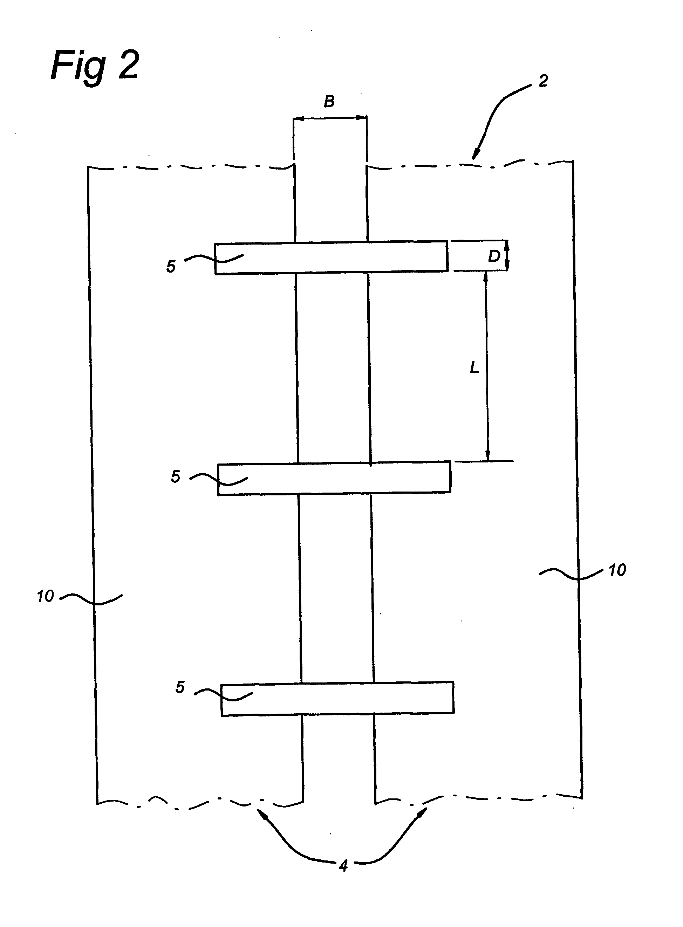

In Figure 2, showing the underside of the cover grille, the following respective dimensions are particularly important: the width D of the bottom surface 9 of connecting part 5, the distance L between the individual connecting parts and the width B of the gap between the elongated parts 4. The bottom surface 10 of the elongated parts 4 is completely closed. In the embodiment according to these drawings the width D of the bottom surface 9 is exactly the same as the width of the top surface 8.

The table below gives, by way of example, a number of numerical values for the abovementioned dimensions according to the invention.

| **DIMENSION** | **(MM)** |
|---|---|
| H | ≥10 |
| B | ≥15 |
| D | ≤20 |
| L | ≤800 |

When a worm tries to cross over from the area with grass 7 to the area with paving 6, a barrier is put up by, on the one hand, the gap between the elongated parts 4 with width B and, on the other hand, the connecting part 5, which is placed in a recessed position over a distance equal to height H of the elongated parts 4. A further barrier is put up by the fact that the connecting parts have been placed at a distance L from each other and have a low width D.

When a worm reaches the gap between the elongated parts 4, it will either turn round and go back to the area with grass 7 or it will fall into the drainage channel 1. In the latter case, owing to the fact that the elongated parts 4 are closed on the underside, it will be difficult or impossible for the worm to crawl out of the channel.

## Claims

1. Take-off and/or landing strip for aircraft, comprising a paving (6), which is provided with a drainage channel on at least part of the paving edges, which drainage channel comprises a channel part (1) with a substantially U-shaped cross section and a cover grille (2), which cover grille comprises
- at least two elongated parts (4) provided in a direction parallel to the longitudinal direction of the channel part (1) and
- connecting parts (5) provided transversely relative to the elongated parts (4), which cover grille (2), spanning the free space between the legs of the U-shaped channel part, rests upon shoulders (3) provided on the legs, **characterized in that**
- the connecting parts (5) are placed at a distance (L) from each other, and **in that**
- the bottom surface (10) of the at least two elongated parts (4) is closed and extends partially into the spanning space between the legs of the U-shaped channel part (1).

2. Take-off and/or landing strip according to Claim 1, **characterized in that** the top surface (8) of the connecting parts (5) is recessed relative to the top surface of the cover grille (2), preferably recessed at least 5 mm, and more preferably at least 10 mm, for example recessed 15 mm or more.

3. Take-off and/or landing strip according to one of the preceding claims, **characterized in that** the width (D) of the top surface (8) of the connecting parts (5) of the cover grille (2) is at most 20 mm, and more particularly at most 15 mm, such as at most 10 mm.

4. Take-off and/or landing strip according to one of the preceding claims, **characterized in that** the width (B) of the gap between the two elongated parts (4) of the cover grille (2) is at least 20 mm.

5. Take-off and/or landing strip according to one of the preceding claims, **characterized in that** the width (B) of the gap between the two elongated parts (4) of the cover grille (2) is at most 80 mm.

6. Drainage channel (1), as disclosed in one of the preceding claims, in particular designed for a take-off and/or landing strip.

7. Use of the drainage channel (1) according to Claim 6 for keeping a paved area free from worms, **characterized in that** the drainage channel (1) is provided along at least part of the edge of the paved area.

8. Use of the drainage channel (1) according to Claim 6 for keeping a take-off and/or landing strip for aircraft free from worms, **characterized in that** the drainage channel (1) is provided along at least part of the edge of the take-off and/or landing strip.

## Patentansprüche

1. Start- und/oder Landebahn für Flugzeuge, mit einem Pflaster (6), das mit einer Ablaufrinne an mindestens einem Teil der Pflasterränder versehen ist, wobei die Ablaufrinne einen Kanalteil (1) mit im Wesentlichen U-förmigem Querschnitt und ein Abdeckgitter (2) umfasst, wobei das Abdeckgitter umfasst
mindestens zwei längliche Teile (4), die in einer Richtung parallel zu der Längsrichtung des Kanalteils (1) bereitgestellt werden, und
Verbindungsteile (5), die quer bezogen auf die länglichen Teile (4) bereitgestellt werden, wobei das Abdeckgitter (2), das den freien Raum zwischen den Stegen des U-förmigen Kanalteils überspannt, auf den auf den Stegen bereitgestellten Schultern (3) ruht, **dadurch gekennzeichnet, dass**
die Verbindungsteile (5) in einem Abstand (L) voneinander angeordnet sind, und **dadurch**, dass
die untere Oberfläche (10) der mindestens zwei länglichen Teile (4) geschlossen ist und sich teilweise in den überspannenden Raum zwischen den Stegen des U-förmigen Kanalteils (1) erstreckt.

2. Start- und/oder Landebahn gemäß Anspruch 1, **dadurch gekennzeichnet, dass** die obere Oberfläche (8) der Verbindungsteile (5), bezogen auf die obere Oberfläche des Abdeckgitters (2), vorzugsweise mindestens 5 mm und bevorzugterweise mindestens 10 mm, beispielsweise 15 mm oder mehr, ausgenommen ist.

3. Start- und/oder Landebahn gemäß einem der vorhergehenden Ansprüche, **dadurch gekennzeichnet, dass** die Breite (D) der oberen Oberfläche (8) der Verbindungsteile (5) des Abdeckgitters (2) höchstens 20 mm und insbesondere höchstens 15 mm, wie beispielsweise höchstens 10 mm beträgt.

4. Start- und/oder Landebahn gemäß einem der vorhergehenden Ansprüche, **dadurch gekennzeichnet, dass** die Breite (B) des Zwischenraums zwischen den beiden länglichen Teilen (4) des Abdeckgitters (2) mindestens 20 mm beträgt.

5. Start- und/oder Landebahn gemäß einem der vorhergehenden Ansprüche, **dadurch gekennzeichnet, dass** die Breite (B) des Zwischenraums zwischen den beiden länglichen Teilen (4) des Abdeckgitters (2) höchstens 80 mm beträgt.

6. Ablaufrinne (1), wie in einem der vorhergehenden Ansprüche offenbart, insbesondere ausgestaltet für eine Start- und/oder Landebahn.

7. Verwendung der Ablaufrinne (1) gemäß Anspruch 6, um einen gepflasterten Bereich frei von Würmern zu halten, **dadurch gekennzeichnet, dass** die Ablaufrinne (1) entlang mindestens einem Teil des Randes des gepflasterten Bereichs bereitgestellt wird.

8. Verwendung der Ablaufrinne (1) gemäß Anspruch 6, um eine Start-und/oder Landebahn für Flugzeuge frei von Würmern zu halten, **dadurch gekennzeichnet, dass** die Ablaufrinne (1) entlang mindestens einem Teil des Randes der Start- und/oder Landebahn bereitgestellt wird.

## Revendications

1. Piste de décollage et/ou d'atterrissage pour aéronef, comportant un revêtement (6) qui est doté d'un canal de drainage sur au moins une partie des bords du revêtement, lequel canal de drainage comporte une partie de canal (1) avec une section transversale sensiblement en U et une grille de couverture (2), laquelle grille de couverture comprenant :
- au moins deux parties allongées (4), prévues dans une direction parallèle à la direction longitudinale de la partie de canal (1); et
- des parties de liaison (5), prévues transversalement par rapport aux parties allongées (4), et dont la grille de couverture (2), couvrant l'espace libre entre les montants de la partie de canal en U, repose sur des épaulements (3) prévus sur les montants, **caractérisée en ce que**
- les parties de liaison (5) sont placées à une distance (L) l'une de l'autre, et **en ce que**
- la surface inférieure (10) des au moins deux parties allongées (4) est fermée et pénètre partiellement dans l'espace de la portée entre les montants de la partie de canal en U (1).

2. Piste de décollage et/ou d'atterrissage selon la revendication 1, **caractérisée en ce que** la surface supérieure (8) des parties de liaison (5) est en retrait par rapport à la surface supérieure de la grille de couverture (2), préférablement en retrait de 5 mm au moins, et plus préférablement de 10 mm au moins, par exemple en retrait de 15 mm ou plus.

3. Piste de décollage et/ou d'atterrissage selon l'une des revendications précédentes, **caractérisée en ce que** la largeur (D) de la surface supérieure (8) des parties de liaison (5) de la grille de couverture (2) est de 20 mm au plus, et plus particulièrement de 15 mm au plus, telle que de 10 mm au plus.

4. Piste de décollage et/ou d'atterrissage selon l'une des revendications précédentes, **caractérisée en ce que** la largeur (B) de l'écartement entre les deux parties allongées (4) de la grille de couverture (2) est de 20 mm au moins.

5. Piste de décollage et/ou d'atterrissage selon l'une des revendications précédentes, **caractérisée en ce que** la largeur (B) de l'écartement entre les deux parties allongées (4) de la grille de couverture (2) est de 80 mm au plus.

6. Canal de drainage (1) tel que décrit dans l'une des revendications précédentes, conçu en particulier pour une piste de décollage et/ou d'atterrissage.

7. Utilisation du canal de drainage (1) selon la revendication 6 pour empêcher la présence de vers sur une zone pavée, **caractérisée en ce que** le canal de drainage (1) est prévu le long d'au moins une partie du bord de la zone pavée.

8. Utilisation du canal de drainage (1) selon la revendication 6, pour empêcher la présence de vers sur une piste de décollage et/ou d'atterrissage, **caractérisée en ce que** le canal de drainage (1) est prévu le long d'au moins une partie du bord de la piste de décollage et/ou d'atterrissage.
